# EUROPÄISCHE PATENTSCHRIFT

(11) **EP 1 497 101 B1**
(45) Veröffentlichungstag und Bekanntmachung des Hinweises auf die Patenterteilung: **17.06.2009**
(21) Anmeldenummer: 03708278.1
(22) Anmeldetag: 01.04.2003
(51) Int. Cl.: B29C 51/42, B29C 51/28, B65B 3/02, B21D 22/00

(54) **VERFAHREN ZUM TIEFZIEHEN VON VERFORMBAREN MATERIALIEN SOWIE BEFÜLLEN DES AUSGEFORMTEN KÖRPERS**
METHOD FOR DEEP DRAWING DEFORMABLE MATERIALS AND FILLING MOULDED BODIES
PROCEDE D'EMBOUTISSAGE DE MATERIAUX DEFORMABLES ET DE REMPLISSAGE DE CORPS MOULES

(30) Priorität: 03.04.2002 DE 10214714; 19.11.2002 DE 10253964
(43) Veröffentlichungstag der Anmeldung: 19.01.2005
(73) Patentinhaber: Deutsches Institut für Lebensmitteltechnik e.V., 49610 Quakenbrück (DE)
(72) Erfinder: Kortschack, Fritz, 14089 Berlin (DE)
(74) Vertreter: Meissner, Bolte & Partner
(86) Internationale Anmeldenummer: PCT/EP2003/003388
(87) Internationale Veröffentlichungsnummer: WO 2003/082546

(56) Entgegenhaltungen:
- EP-A- 0 521 574
- WO-A-01/51270
- DE-B- 1 171 597
- GB-A- 1 001 811
- US-B1- 6 324 819

## Beschreibung

Die Erfindung betrifft ein Verfahren zum Herstellen von durch Tiefziehen geformten Körpern, beispielsweise von Hohlkörpern oder Verpackungen sowie Befüllen derartiger ausgeformter Körper.

Tiefziehen, auch als Warmformen, Streckformen oder Thermoforming bezeichnet, ist die Umformung einer thermoplastischen Folie oder Platte in ein dreidimensionales Gebilde. Ausgangsprodukt sind in der Regel Bahnen sowie Zuschnitte aus Blech oder Folie und in der Kunststofftechnik auch Platten zur Herstellung großflächiger Formteile.

In der Folientechnologie wird das Warmformen meist zur Herstellung von Verpackungsmaterialien, wie Bechern, Schalen, Einsätzen oder Trays genutzt.

Dazu wird eine in einem Spannrahmen fixierte Folie beispielsweise zunächst mit Infrarot-Strahlern ein- oder beidseitig erwärmt, bis ein plastischer Zustand erreicht ist. Für eine nachfolgende Verformung gibt es verschiedene Möglichkeiten, die miteinander kombinierbar sind. Üblicherweise werden Druckluft, Unterdruck bzw. Vakuum sowie mechanische Hilfsmittel und Formwerkzeuge eingesetzt.

Zur Bildung eines geformten Körpers besteht prinzipiell die Möglichkeit, eine zu formende thermoplastische Folie oder Platte ohne die Vorgabe einer konkreten Formbegrenzung in den freien Raum zu blasen, wobei die Gestalt des Blasteils durch den Umriß des Spannrahmens, des Luftdrucks und der Temperatur bestimmt wird. Üblicherweise wird jedoch die Gestalt des Formteils durch Werkzeuge vorgegeben, wobei eine Negativ- und eine Positivformung möglich sind. Bei der Negativformung ist eine Blisterform als negatives Abbild in ein als Matrize dienendes Formwerkzeug eingearbeitet. Das Formwerkzeug ist an einen Hubzylinder gekoppelt, der es öffnet und schließt. Nach oben wird das Formwerkzeug durch eine feststehende Platte abgeschlossen.

Die Negativformung wird meist zur Herstellung einfacher, flacher Formen mit geringer Ziehtiefe eingesetzt. Bei größerer Ziehtiefe bestünde die Gefahr, daß das zu verformende Material ungleichmäßig gezogen wird, was zu ungleichmäßigen Wanddicken und somit zu Schwachstellen im Produkt führt. Deshalb muß in diesen Fällen eine Vorformung mit Preßluft oder mechanisch mit Hilfe eines Vorstreckstempels erfolgen. Dies ist in zweierlei Hinsicht nachteilig, denn zum einen erkaltet während der Vorstreckung das tiefzuziehende Material bereits - insbesondere bei einem Preßlufteinsatz - und zudem erfordert die Vorformung einen zusätzlichen Arbeitsschritt, der insbesondere bei Massenprodukten, wie beispielsweise Joghurt-Bechern oder dergleichen Produktverpackungen ein maßgeblicher Zeitfaktor ist, der die Produktion und somit die Effizienz dieses Fertigungsverfahrens verschlechtert.

Beim Positivformen besteht das Werkzeug aus einem Oberstempel, einem oberen Rahmen und einem unteren Rahmen. Der Oberstempel ist als positives Abbild der Blisterform ausgebildet. Der Oberstempel und der untere Rahmen sind jeweils zum Öffnen und Schließen des Werkzeugs an einen Hubzylinder gekoppelt. Die Positivformung wird insbesondere bei komplexeren Formen mit mittlerer und großer Ziehtiefe eingesetzt. Auch hier gilt: je größer die Ziehtiefe, desto erforderlicher ist eine Vorformung. Diese erfolgt bei der Positivformung durch Einblasen von Preßluft aus oberstempelseitiger Richtung sowie durch das rahmenseitige Anlegen eines Unterdrucks. Die eigentliche Formgebung erfolgt dadurch, daß oberstempelseitig ein Vakuum angelegt wird. Dies ist insbesondere deshalb problematisch, da zum Vorformen zunächst Preßluft in Richtung des zu verformenden Materials geblasen wird, wobei jedoch zum Bilden des Formteils spontan auf Unterdruck, insbesondere Vakuum, umgeschaltet werden muß. Darüber hinaus kühlt auch beim Positivformen das tiefzuziehende Material bereits während der Vorformung, insbesondere bei einem Preßlufteinsatz, stark ab, so daß die Herstellung von geformten Körpern mit hohen bis sehr hohen Ziehtiefen oder komplexen Formen nicht oder nur unter hohem Aufwand möglich ist.

Als weitere Variante bietet sich für einfache Bauteile mit geringer Ziehtiefe auch eine rein mechanische Formgebung mittels einem als Matrize dienenden Rahmen und einem als Patrize dienenden Stempel an. Dieses Verfahren ist insbesondere auch für Gegenstände aus Metall, insbesondere Blech, geeignet. Mittlere und große Ziehtiefen lassen sich auf diese Weise nicht oder nur schwer verwirklichen, da in Abhängigkeit der jeweiligen zu bildenden Form Inhomogenitäten, insbesondere im Hinblick auf die Materialdicke des tiefzuziehenden Materials zu befürchten sind, so daß Schwachstellen im fertigen Produkt auftreten würden. Hinterschnittene Formen sind auf diese Weise nicht zu fertigen.

All diesen Tiefziehvorgängen ist es gemeinsam, daß zunächst eine aus einem Rahmen und einem Deckelelement bestehende Form geöffnet wird. Das tiefzuziehende Material wird zwischen den Rahmen und das Deckelelement eingebracht und randseitig festgespannt. Sodann erfolgt ein Aufheizen, beispielsweise mittels IR-Strahlung oder Warmluft. Bei Erreichen einer vorgegebenen Temperatur erfolgt sodann der eigentliche Tiefziehvorgang zur Formgebung, dem gegebenenfalls ein Vorformen, wie oben erwähnt, vorgeschaltet ist.

Da die eigentliche Formgebung erst nach einem Erwärmen des zu verformenden Materials erfolgt, bzw. da während des eigentlichen Formvorgangs bereits wieder eine Abkühlung des zu verformenden Materials stattfindet, muß das Material zunächst sehr stark aufgeheizt werden. Dies bedeutet zum einen einen hohen Energieaufwand und zum anderen ist das Tiefziehen auf solche Materialien beschränkt, die einer solch hohen, über eine Mindestverformbarkeits-Temperatur weit hinausgehenden Temperatur ohne eine Beeinträchtigung ihrer-physikalischen und chemischen Eigenschaften standhalten. Letzeres spielt beispielsweise auch im Hinblick auf eine Recycelbarkeit der hergestellten Produkte eine Rolle, da durch ein zu starkes Aufheizen eine Versprödung des Ausgangsmaterials zu befürchten ist.

Zu guter Letzt ist bei einer derartig hohen Temperatur ein Ausgasen von Kunststoff-Komponenten zu befürchten, so daß ein der Produktion, respektive Formgebung, unmittelbar nachgeschaltetes Befüllen, von insbesondere Lebensmittelverpackungen, mit Lebensmitteln nicht in Betracht kommt, da eine Kontamination der Lebensmittel zu befürchten wäre.

Ein Verfahren nach dem Oberbegriff von Anspruch 1 ist aus der EP 0 521 574 bekannt.

Die Aufgabe der Erfindung ist es, ein Verfahren zum Herstellen von geformten Körpern und insbesondere Verpackungen für den Lebensmittel- und Nahrungsgüterbereich derart weiterzubilden, daß die vorgenannten Nachteile vermieden werden und ein Verfahren zur Verfügung gestellt wird, das die Bildung komplexer Körper mit hoher Ziehtiefe unter verträglichen Prozeßbedingungen gewährleistet.

Gelöst wird die Aufgabe durch ein Verfahren zum Herstellen von geformten Körpern gemäß Anspruch 1.

Der wesentliche Vorteil, der sich aus der Verwendung einer Patrizenflüssigkeit ergibt, besteht darin, daß sich ein verformbares Material, wie z.B. eine Kunststoff-Folie, durch die Druckeinwirkung der Patrizenflüssigkeit schonend an die Form der Matrize anpassen läßt. Wesentlich hierbei sind zwei Faktoren: Zum einen breitet sich ein aufzuwendender Druck homogen in der gesamten Patrizenflüssigkeit aus und wirkt gleichmäßig auf das zu verformende Material. Zum anderen übt die Patrizenflüssigkeit keine mechanischen Reibungs- oder Scherkräfte auf das zu verformende Material aus, wie dies beispielsweise ein Stempel tun würde. Materialquetschungen, die zu unerwünschten "Sollbruchstellen" führen würden, werden so vermieden.

Hinzu kommt, daß sich der Druck, der in der Patrizenflüssigkeit aufgebaut wird, leicht und individuell an die Eigenschaften des Ausgangsmaterials anpassen läßt. Dies bedeutet, daß der Druck auch während des Tiefziehvorgangs, z.B. gemäß einer vordefinierten Verfahrensführung, variiert werden kann. Bei einem Einsatz geeigneter Sensoren, die beispielsweise die momentane Materialdicke des zu verformenden Materials messen, wäre beispielsweise eine unmittelbare Druckanpassung möglich. Ebenso läßt sich der Druck je nach gerade auszuformendem Matrizenbereich anpassen.

Erfindungsgemäß ist das Tiefziehen mittels einer Patrizenflüssigkeit bei Raumtemperatur möglich, es kann jedoch gemäß einer Ausführungsform der Erfindung durch ein Erwärmen der Flüssigkeit unterstützt werden, sofern die Plastizität des zu verformenden Materials bei Raumtemperatur nicht ausreichend ist. Die Temperatur der Patrizenflüssigkeit kann dementsprechend den individuellen Eigenschaften des Ausgangsmaterials angepaßt werden.

Ein weiterer wesentlicher Vorteil, der sich aus dem Einsatz einer erwärmten Patrizenflüssigkeit ergibt, besteht darin, daß während des gesamten Verformungsprozesses die gleiche voreinstellbare Temperatur der Flüssigkeit auf das Behandlungsgut, nämlich auf das zu verformende Material einwirkt. Deshalb reicht bereits eine weitaus geringere Temperatur für die Erwärmung des zu verformenden Materials aus, als wenn, wie bei anderen konventionellen Thermoverformungen, das Material nur zu Beginn des Prozesses erwärmt würde. Eine Abkühlung während des eigentlichen Tiefziehvorgangs findet erfindungsgemäß nicht statt. Dies wirkt sich u.a. positiv auf ein Rückschrumpfen der fertigen Formteile aus, da ein Memoryeffekt bezüglich der erreichten Form bei niedrigen Temperaturen stärker als bei hohen Temperaturen ausgeprägt ist.

Zudem ist es möglich, die Temperatur der Patrizenflüssigkeit während des Tiefziehvorgangs zu variieren. So ist es vorteilhaft, wenn die Patrizenflüssigkeit gegen Ende der Verformung geringer als zu Beginn der Verformung ist, da auf diese Weise ein Rückschrumpfen des verformten Materials effektiv vermieden werden kann.

Gemäß einer zweiten Ausführungsform der Erfindung wird zumindest ein Bereich eines Rahmens, üblicherweise das Deckelelement, durch den die Flüssigkeit in einen Patrizenbereich der Matrizenform eintritt, erwärmt. Auf diese Weise ist gewährleistet, daß eine potentielle Kontaktfläche des Rahmens mit dem zu verformenden Material, zur Vermeidung von Temperaturdifferenzen, auf das Temperaturniveau der Patrizenflüssigkeit eingestellt ist.

Somit ist es möglich, das zu verformende Material gleichmäßig auf eine für die Verformung optimale Temperatur zu bringen, so daß ein durch die Flüssigkeit, die vorzugsweise über ein Deckelelement in den Patrizenbereich eingebracht wird, aufgebauter hydrostatischer Druck gleichmäßig auf das gesamte zu verformende Material wirkt, das auf diese Weise schonend und homogen ausgezogen wird. Selbst Materialien mit einer sehr geringen Ausgangsstärke, wie beispielsweise dünne Folien oder Membranen, können auf diese Weise bearbeitet werden.

Gemäß einer dritten Ausführungsform der Erfindung wird zumindest ein Bereich, in dem das verformbare Material, insbesondere randseitig, gehalten wird, und/oder ein Wandungsbereich der Matrizenform zumindest auf Umgebungstemperatur gehalten oder insbesondere gekühlt. Auf diese Weise ist es einerseits möglich, während des Tiefziehvorgangs mittels der Patrizenflüssigkeit einen sicheren Halt des verformbaren Materials in dem Spannrahmen zu gewährleisten, als auch eine Abkühlung des verformbaren Materials unmittelbar bei einem Kontakt mit einem Wandungsbereich der Matrizenform zu bewirken. Hierfür können beispielsweise eine geringe Wärmekapazität aufweisende Peltier-Elemente Anwendung finden. Hierdurch gelingt es, insbesondere komplexe und/oder dickwandige Formen schnell zu "fixieren" und eine Prozeßbeschleunigung zu bewirken. Ein Rückschrumpfen wird vermieden.

Gemäß einer vierten Ausführungsform wird während des Tiefziehvorgangs ein Matrizenraum auf der der Patrizenflüssigkeit abgewandten Seite des zu verformenden Materials entlüftet, um auf diese Weise eine verbesserte Anlage des zu verformenden Materials an die Matrizenform zu gewährleisten. Dies kann durch ein Anlegen eines Unterdrucks zusätzlich unterstützt werden.

Gemäß einer fünften Ausführungsform der Erfindung wird der Matrizenraum vor einem Beginn des Tiefziehvorgangs mit einem vorzugsweise erwärmten Temperfluid zumindest teilweise gefüllt. Dieses wird während des Tiefziehvorgangs aus vorgenannten Gründen wieder aus dem Matrizenraum entfernt. Das Entfernen kann entweder durch eine einfache Verdrängung seitens einer fortschreitenden Ausformung des zu verformenden Materials unter dem Einfluß der Patrizenflüssigkeit oder durch ein aktives Entfernen, beispielsweise durch Absaugen erfolgen.

Die Verwendung eines Temperfluids hat den wesentlichen Vorteil, daß auf diese äußerst einfache Weise eine Ausformung auch stärkerer Ausgangsmaterialien möglich ist, für die eine einseitige Erwärmung unzureichend wäre. Ein Tiefziehen derartiger dicker Materialien ist mit üblichen Methoden nach dem Stand der Technik bislang nur mit großem Aufwand oder gar nicht möglich.

Ebenso kann die gesamte, die Matrizenform umfassende Matrize temperiert werden. Hierfür ist ebenfalls die Verwendung eines Temperfluids, z.B. eine temperierte Flüssigkeit oder ein temperiertes Gas, vorgesehen. Auch kann die gesamte Vorrichtung auf eine optimale Verformungstemperatur temperiert bzw. eingestellt sein.

Des weiteren kann die Matrize von einem ersten Temperaturbereich in zumindest einen weiteren Temperaturbereich transportiert, insbesondere verfahren werden. Auf diese Weise ist es möglich, die Temperatur der Matrize bzw. der gesamten Formgebungsvorrichtung während des Tiefziehvorgangs zu ändern. Zu Beginn des Tiefziehvorgangs kann die Temperatur nahe bei oder etwas über der Plastizitätstemperatur des zu verformenden Materials liegen. Im weiteren Verlauf des Tiefziehvorgangs kann die Temperatur abgesenkt werden, so daß sie gegen Ende des Tiefziehvorgangs in einem Bereich liegt, in dem ein Rückschrumpfen nicht mehr zu befürchten bzw. nur noch sehr langsam oder gar nicht mehr möglich ist.

Der Transport von einem ersten Temperaturbereich zu mindestens einem weiteren Temperaturbereich kann beispielsweise durch ein Verfahren der gesamten Anlage, z.B. auf einem Bandförderer durchgeführt werden. Ebenso ist es möglich, die gesamte Anlage innerhalb einer Temperflüssigkeit, deren Temperatur anforderungsgemäß geändert, d.h. erhöht oder erniedrigt wird, zu lagern.

Nach einer beendeten Ausformung wird die Patrizenflüssigkeit abgesaugt oder durch die Zufuhr eines gasförmigen Mediums aus dem Patrizenbereich hinausgedrückt - auch ein einfaches Ausgießen ist selbstverständlich möglich - und kann anschließend wieder verwendet werden. Die Patrizenflüssigkeit behält hierbei im wesentlichen ihre Temperatur, so daß ein für die Erwärmung für einen weiteren Ausformungsvorgang notwendiger Energiebedarf minimiert ist.

Sofern es sich um ein ausreichend flexibles geformtes Material handelt, kann die entstandene Form umgestülpt werden. Dies ist beispielsweise bei dünnen Folien der Fall, die dann ohne zusätzliche Nachbehandlung direkt ein Produkt aufnehmen können.

Gemäß einer ergänzenden Ausführungsform der Erfindung kann zum Entformen in dem Matrizenraum ein Überdruck erzeugt werden. Dies ist beispielsweise durch ein Einblasen eines Gases oder ein Einpressen einer Flüssigkeit möglich. Ebenso kann ein Entformen mechanisch, beispielsweise durch Herausdrücken oder Herausheben erfolgen.

Nach einer sechsten Ausführungsform der Erfindung wird zwischen dem verformbaren Material und der Patrizenflüssigkeit zumindest eine, insbesondere plastische und/oder elastische Membran und/oder Barriereschicht angeordnet. Auf diese Weise kann ein direkter Kontakt des flüssigen Behandlungsmediums - nämlich der Patrizenflüssigkeit - mit dem zu verformenden Material vermieden werden. Hierdurch ist eine Patrizenflüssigkeit, unabhängig von einer potentiellen chemischen Unverträglichkeit, mit dem zu verformenden Material einsetzbar. Dies ist insbesondere dann von Interesse, wenn das zu verformende Material hohe Temperaturen der Patrizenflüssigkeit erfordert, bei denen Wasser als Patrizenflüssigkeit ausscheidet. In derartigen Fällen kann beispielsweise Öl oder eine andere organische oder anorganische Flüssigkeit eingesetzt werden. Auch Mischungen von Flüssigkeiten sind als Patrizenflüssigkeit, beispielsweise als Öl-Wasser-Emulsion, denkbar. Es sei jedoch betont, daß Wasser ein bevorzugtes Patrizenmedium ist.

Die vorerwähnte Membran kann entweder dauerhaft mit dem zu verformenden Material verformt werden und nach einer vollendeten Ausformung an diesem haften, oder sie kann sich elastisch in ihre ursprüngliche nichtverformte Ausgangsstellung zurückbilden. Die Stärke der Membranschicht kann für einen gezielten Einfluß auf die Materialverformung der zu formenden Folien variiert werden, d.h. über die Vorgabe der Membranschichtdicke ist eine mittelbare Steuerung der Restdicke der ausgeformten Folie möglich, indem deren Streck- oder Dehnungsverhalten z.B. in Kantenbereichen verringert wird und somit keine unerwünschten Materialschwächungen auftreten.

Je nach Ausführungsform wird die Patrizenflüssigkeit nach der Druckentlastung zurückgesaugt und die Membran respektive Schutzhülle wird aus dem fertig verformten Hohlkörper bzw. aus der Verpackung herausgezogen.

Sinnvollerweise ist es möglich, eine Membran mit Füllgut zu füllen und in einen Hohlkörper, z.B. einer Flasche zu belassen, beispielsweise als Kontaktschutz oder als Barriereschicht zu dem verformbaren Material. Für den Fall, daß die Membran in der Flasche belassen werden soll, wird diese mit einer Lack- oder Kleberschicht, die an dem verformbaren Material und/oder an der Rückseite der Membran so vorgesehen ist, daß ein Klebkontakt zwischen dem verformbaren Material und der Membran während der Ausformung des Hohlkörpers oder der Verpackung stattfinden kann, an die Innenoberfläche des Hohlkörpers oder der Verpackung angeformt.

Bei der Verwendung von in dem Hohlkörper verbleibenden Membranen bzw. Schutzhüllen ist es - unter Verwendung einer geeigneten Membranhaltevorrichtung - möglich, mehrere Membranen in den Hohlkörper einzubringen, so daß voneinander getrennte Kompartimente entstehen, die nach einer vollendeten oder während einer Ausformung mit unterschiedlichen Inhalten gefüllt werden können. Je nach Verwendungszweck und Verschlußart ist es vorgesehen, daß die einzelnen Kompartimente unabhängig voneinander geöffnet werden können. Auf diese Weise ist es beispielsweise möglich, verschiedenartige Flüssigkeiten oder Schüttgut getrennt voneinander zu verpacken und erst bei ihrer Verwendung zu vermischen oder völlig separat zu verbrauchen.

Ebenso wie eine plastische und/oder elastische Membran zur Erzeugung der Kompartimente verwendet werden kann, ist dies erfindungsgemäß auch mit einer Barriereschicht, beispielsweise aus einer Metall- oder Silikonfolie respektive -schicht möglich. Für das jeweilige Material ist das zu verfüllende Füllgut und dessen chemische Reaktivität maßgeblich.

Gemäß einer siebten Ausführungsform weist die Membran zumindest eine Durchgangsöffnung auf, durch die ein Füllbereich zugänglich ist, der zwischen der Membran und einer weiteren Membran und/oder dem verformbaren Material angeordnet ist.

Für einige Anwendungsbereiche kann auf diese Weise in Kombination mit einer Fülleinrichtung ein Produkt direkt in der entstandenen Tiefziehform verpackt werden. Bei einem derartigen Füllvorgang der entsprechenden Tiefziehform wird gleichzeitig die zuvor für den Druckaufbau benötigte Patrizenflüssigkeit aus dem Patrizenbereich verdrängt, so daß der nunmehr gefüllte Formkörper direkt aus der Matrizenform entnommen werden kann.

Ebenso ist es möglich, als Patrizenflüssigkeit direkt eine Nutzflüssigkeit zum Tiefziehen des verformbaren Materials zu verwenden. Diese verbleibt nach einer vollendeten Ausformung in der Tiefziehform, die ihrerseits nurmehr verschlossen wird. Als Nutzflüssigkeit kommen beispielsweise Fertigsuppen, Säfte oder dergleichen flüssige Substanzen in Betracht.

Aufgrund der niedrigen Temperatur, die bei der Verwendung einer Patrizenflüssigkeit im Gegensatz zu den bisher üblichen Tiefziehverfahren möglich ist, besteht keine Gefahr, daß Kunststoff-Komponenten aus dem zu verformenden Material austreten, insbesondere ausgasen. Sofern es erwünscht ist, kann jedoch selbstverständlich als Membran zwischen der Nutz-Patrizenflüssigkeit und dem zu verformenden Kunststoffmaterial ein inertes Material als Barriereschicht, im Fall einer Suppe beispielsweise eine Metallfolie eingebracht sein.

Gemäß einer achten Ausführungsform wird eine als Patrize wirkende Nutzflüssigkeit zwischen zwei benachbart angeordnete und gegeneinander abgedichtete verformbare Materialien, insbesondere Folien oder Bleche, eingebracht, wobei ein gleichzeitiges Ausformen der beiden Materialien gegebenenfalls in gegenläufige Richtungen, beispielsweise als Ober- und Unterform, durchgeführt wird.

Gemäß einer neunten Ausführungsform werden Anlageflächen eines verformbaren Materials und/oder einer Membran mit zumindest einer weiteren Membran und/oder einem verformbaren Material mittels einer Siegelvorrichtung, vorzugsweise in einem Randbereich, dauerhaft miteinander verbunden. Auf diese Weise ist eine gleichzeitige Ausformung von zwei übereinander angeordneten Folien möglich. Siegelvorrichtungen gewährleisten hierbei eine dauerhafte Verbindung zwischen einer Ober- und einer Unterfolie, beispielsweise in Form einer Verbindungsnaht. Damit nach dem Siegel- und Ausformvorgang eine Befüllung des geschaffenen Zwischenraums erfolgen kann, wird ein Bereich von der Siegelung ausgespart. Durch diese Öffnung wird das Füllgut in den Zwischenraum transportiert. Danach wird auch dieser Bereich versiegelt. Vorzugsweise wird während des Siegelvorgangs eine Verschlußvorrichtung, wie z.B. ein Schraubverschluß, dauerhaft eingelassen. Dieser ermöglicht ein Befüllen und Entnehmen des Füllguts.

Gemäß einer Ausgestaltung der Erfindung ist das verformbare Material mehrlagig, insbesondere dreilagig oder zweilagig mit einer zwischen den zwei Lagen angeordneten Zwischenschicht ausgebildet. Als Zwischenschicht kann ein zu verpackendes Material, insbesondere ein festes, halbfestes oder unter Druck nicht zerfließendes Material verwendet werden.

Gemäß einer bevorzugten Ausführungsform ist dies ein Lebensmittel, insbesondere Fleisch, bevorzugt Frischfleisch. Dieses hält aufgrund seiner Faserstruktur auch unter Druck seine Form weitgehend bei.

Im Gegensatz zu üblichen angewandten Verpackungsmethoden für Fleisch weist dieses Verfahren den maßgeblichen Vorteil auf, daß die Folien eng und insbesondere glatt an dem verpackten Fleisch anliegen. Es treten keine Falten auf; diese hätten den gravierenden Nachteil, daß ein Kapillarsog erzeugt würde, der dem Fleisch fluide Bestandteile entziehen würde, wodurch das Fleisch an Qualität verlöre. Ein wesentlicher Vorteil dieser Verpackungsvariante für Fleisch besteht darin, dass die Folie beim Verpacken des Fleisches unmittelbar und gleichmäßig an das Fleisch angepresst wird, was zu vorgenanntem Vorteil führt. Darüber hinaus gewährleistet die Patrizenflüssigkeit einen direkten und guten Wärmeübergang auf das Fleisch; somit ist ein effektives Kühlen bzw. Temperieren bzw. Erwärmen des Fleisches in definierten Zeiträumen möglich. Dies ist wesentlich, da sich auf diese Weise eine Verkürzung der Fleischfasern vermeiden läßt, so das das Fleisch nicht zäh wird. Ein wesentliches Erfordernis hierbei ist, ein optimaler Wärmeübergang von dem umgebenden Fluid auf das Fleisch, der dadurch gewährleistet ist, dass die Folien so flexibel sind, dass sie sich der Kontur des Fleisches genau anpassen. Hierfür können die Folien entweder eine ursprüngliche Flexibilität im erforderlichen Ausmaß besitzen oder während des Verpackungsvorganges erwärmt werden. Ein weiterer wesentlicher Vorteil der Verwendung des erfindungsgemäßen Verfahrens besteht darin, daß es sich leicht automatisieren läßt.

Das erfindungsgemäße Verfahren ist äußerst energieeffizient, da die zum Ausformen eines Hohlkörper oder einer Verpackung notwendige Wärme und Druckenergie gleichzeitig zum Füllen des Hohlkörpers oder der Verpackung genutzt wird. Ein Transport von fertigen Hohlkörpern zu einem Abfüller entfällt, da der Hohlkörper-Hersteller gleichzeitig der Abfüller ist. Somit entfällt ein Transportweg fertiger aber ungefüllter Verpackungen völlig, da lediglich Vorformlinge oder rollen- bzw. plattenförmige Folien platzsparend transportiert werden müssen. Das LKW-Aufkommen und mithin die Kosten können somit reduziert werden.

Als weiterer Vorteil des erfindungsgemäßen Verfahrens ist die Gefahr einer Kontamination bzw. einer Rekontamination sehr gering, da die Prozesse der Hohlkörperfertigung und der Befüllung zeitlich gleichzeitig oder dicht aufeinander erfolgen.

Sämtliche Formgebungen sind möglich, d.h. auch Hinterschnitte.

Da der hydrostatische Druck gleichmäßig auf das zu verformende Material einwirkt, wird dieses, insbesondere auch aufgrund der gleichförmig auf das verformbare Material einwirkenden Temperatur, deutlich gleichmäßiger ausgeformt als bei herkömmlichen, bislang bekannten Verfahren. Somit kann Material eingespart und Lagerfläche für Leergut stark reduziert werden.

Gemäß einer zehnten Ausführungsform der Erfindung ist zumindest an einer äußeren Oberfläche des verformbaren Materials, insbesondere an einer äußeren Oberfläche eines bereits verformten, insbesondere fertig verformten, verformbaren Materials eine Adhäsionsschicht, insbesondere eine Lack- oder Klebeschicht vorgesehen. An dieser kann ein Etikett oder ein Label vorgesehen sein. Des weiteren ist es möglich, bei der Verwendung eines mehrlagigen verformbaren Materials eine äußere, bereits fertig bedruckte Schicht vorzusehen, die sich entsprechend den jeweiligen Ausformverhältnissen dehnt und ein Layout ausbildet. Die Vorsehung einer solchen "Label"-Schicht ist insbesondere bei der Verwendung von Vorformlingen vorteilhaft. Die Dehnung und somit das Design der "Label"-Schicht während der Fertigformung, d.h. während des Tiefziehens, ist durch Versuche bestimmbar.

Bei der Verwendung einer transparenten oder Semitransparenten äußersten Schicht eines mehrlagigen verformbaren Materials ist es ebenso möglich, diese hinterdruckt, beispielsweise mittels Siebdruck, oder mit einer "Label"-Folie hinterlegt zu verwenden.

Gemäß einer Variante wird zur Herstellung von Hohlkörpern oder Verpackungen ein Vorformling verwendet. Dieser kann bereits die grundlegende Struktur bzw. Form des späteren fertig geformten Hohlkörpers oder der Verpackung haben. Durch die Verwendung eines Vorformlings ist es möglich, komplexe Formen, beispielsweise mit unterschiedlichen Wandstärken entsprechend einer Vorgabe des Vorformlings auszuformen.

Gegebenenfalls wird das verformbare Material und/oder der Vorformling vor einem Befüllen mit einer Nutzflüssigkeit sterilisiert. Die Sterilisierung kann auf vielfältige Weise erfolgen; einige Behandlungsmöglichkeiten sind im weiteren genannt. So ist es, insbesondere bei Hohlkörpern oder Verpackungen möglich, die Innenoberfläche eines Vorformlings, mit Sterilluft oder mit einer sterilisierenden Flüssigkeit, gegebenenfalls unter Beimengung sterisilierender Chemikalien zu spülen. Hierbei ist es von Vorteil, daß die Innenoberfläche des Vorformlings wesentlich kleiner ist als bei dem Endprodukt. Somit wird weniger Sterilluft oder Spülflüssigkeit, wie beispielsweise Alkohol, benötigt als bei dem fertig ausgeformten Hohlkörper / Verpackung.

Als verformbare Materialien werden erfindungsgemäß HDPE (Hochdruck-Polyethylen), LDPE (Niederdruck-Polyethylen), PE (Polypropylen), PVC (Polyvinylchlorid), PET (Polyethylentherephthalat) oder PETG (Glycol-modifiziertes Polyethylentherephthalat) verwendet. Ebenso ist die Verwendung von Blechen und Metallfolien vorgesehen.

Als besonders vorteilhaft hat sich Polyethylentherephthalat (PET) erwiesen, das als Flachfolie warm verformt wird. Dieses Material eignet sich hervorragend, um in Form eines Vorformlings mit einem warmen Füllgut als Patrizenflüssigkeit unter Druck gesetzt und verformt zu werden, bis es sich unter Erreichen der Endform innerhalb der Matrizenform an die begrenzende und formgebende Innenoberfläche der Matrizenform angelegt hat. Durch eine leichte Temperaturerhöhung wird das PET-Material weich und verformbar. Eine Versprödung, Ausdünstung oder ein Bruch ist nicht zu befürchten. Die Sterilisierung einer, beispielsweise PET-Flasche mittels Sterilluft, Alkohol oder einer Drucksterilisation ist problemlos möglich. Nach dem Ausformen in und/oder mit einer warmen Flüssigkeit kann der in der Matrize noch unter Druck stehende Hohlkörper in ein kaltes Bad überführt werden. Dadurch wird errecht, daß der PET-Körper abgekühlt wird und keine Rückschrumpfung erfolgt. Die abgeführte Wärme kann zurückgewonnen werden.

Es kann auch eine kalte Patrizenflüssigkeit verwendet werden. Die notwendige Wärmezufuhr erfolgt dann durch die Matrizenflüssigkeit oder die erwärmte Matrize an sich.

Vorgeschlagen wird auch eine Vorrichtung zum Herstellen von geformten Körpern, insbesondere von Hohlkörpern und/oder Verpackungen mittels Tiefziehen, wobei ein verformbares Material mittels einer Patrize an eine Matrize angepaßt wird, wobei die Patrize eine, vorzugsweise erwärmte, Flüssigkeit (Patrizenflüssigkeit) ist, die durch in einem Rahmen vorgesehene Öffnungen in einen Patrizenbereich einpreßbar und daraus entfernbar, vorzugsweise absaugbar ist.

Gemäß einer Ausgestaltung weist die Matrize Ent- und/oder Belüftungsöffnungen auf, durch die ein Fluid in einen Matrizenbereich einfüllbar und/oder daraus entfernbar ist.

Dies ist wesentlich, da auf diese Weise ein Temperfluid, insbesondere ein Gas oder eine Flüssigkeit einer bestimmten Temperatur, in den Matrizenbereich einbringbar ist. Darüber hinaus kann während eines Tiefziehvorgangs die Luft auf der patrizenflüssigkeitsabgewandten Seite des zu verformenden Materials aus dem Matrizenbereich entweichen oder aus diesem abgesaugt werden. Hierfür sind Luftkanäle vorgesehen, sofern nicht ein poröses Material, wie z.B. Aluminiumschaum, als Material für die Matrize verwendet wurde. Vorzugsweise sind die Öffnungen, die einer Be- oder Entlüftung dienen bzw. die für einen Zu- oder Abfluß von Temperfluid verwendet werden, von kleinem Durchmesser, so daß eine Störung der der Matrizenform zugewandten Seite der Oberfläche des ausgeformten Köpers nicht stattfindet. Um eine potentielle Störung der Oberfläche zu kaschieren, könnten derartige Öffnungen auch in Form eines Musters vorgesehen sein, das in dem fertigen Formteil ausgeprägt ist.

Des weiteren ist gemäß einer weiteren vorrichtungsseitigen Ausgestaltung vorgesehen, Be- und Entlüftungsöffnungen im Matrizenbereich mit Klappen zu versehen, die spätestens dann verschlossen werden und eine glatte innere Matrizenoberfläche gewährleisten, sobald eine Anlage des zu verformenden Materials während des Tiefziehvorgangs unmittelbar bevorsteht.

Eine Temperaturregeleinrichtung stellt sicher, daß die Temperatur der Patrizenflüssigkeit und/oder des Fluids und/oder des Rahmens optimal auf die Eigenschaften des zu verformenden Materials abgestimmt ist. Gegebenenfalls wird die Temperatur entsprechend durch die Temperaturregeleinrichtung eingestellt oder nachgeregelt.

Eine Kühlvorrichtung zur Kühlung der Wandung des Matrizenbereichs und/oder eines Bereichs, in dem das verformbare Material, insbesondere randseitig, gehalten wird, ist ergänzend vorgesehen. Dies kann entweder durch ein in die Matrizenform eingearbeitetes Röhrensystem oder durch die Verwendung eines Matrizenmaterials mit hoher Wärmeleitfähigkeit und einer externen Kühlung realisiert sein.

Des weiteren wird eine Vorrichtung zum Anbringen einer Befüllvorrichtung zum Befüllen eines fertig ausgeformten Hohlkörpers vorgeschlagen. Ebenso ist eine Siegelvorrichtung und/oder eine Vorrichtung zum Anbringen einer, insbesondere wieder verschließbaren Verschlußvorrichtung vorgesehen.

Bevorzugt ist die die Matrizenform umfassende Matrize temperiert. Hierfür ist ein Temperfluid vorgesehen, das die Matrize vorzugsweise umspült. Des weiteren ist die Matrize erfindungsgemäß von einem ersten Temperaturbereich zu mindestens einem weiteren Temperaturbereich transportierbar, insbesondere verfahrbar. Dies kann beispielsweise mittels eines Förderbands geschehen. Selbstverständlich sind an dieser Stelle auch andere Variante möglich, die eine Temperaturänderung an bzw. in der Matrize bewirken können. So können beispielsweise die Matrize durchziehende Wärmetauscherrohre, durch die ein Temperfluid fließt bzw. gepumpt wird, vorgesehen sein.

Vorgeschlagen wird weiterhin die Verwendung einer vorgenannten Vorrichtung zum simultanen Herstellen und Befüllen eines Verpackungsbehälters, der gemäß einer weiteren Ausführungsform im Anschluß daran versiegelt wird.

Aus dem Stand der Technik ist es bekannt, rohes Brät in eine tiefgezogene Unterfolie zu füllen. Der Tiefziehvorgang einerseits und der Füllvorgang andererseits werden gemäß Stand der Technik räumlich und zeitlich getrennt ausgeführt. Eine gleichmäßige Oberflächenbehandlung des rohen Bräts, z.B. mit Flüssigrauch, ist auf diese Weise nicht durchführbar.

Gemäß einer Ausführungsform der vorliegenden Erfindung ist vorgesehen, daß das Ausformen des-Tiefziehmaterials, insbesondere bei Tiefziehfolie, und das Befüllen in derselben Bearbeitungsstation möglichst zeitgleich erfolgt. Hierdurch ist es möglich, die Oberfläche des Füllguts unmittelbar beim Füllvorgang mit Substanzen, wie z.B. Flüssigrauch oder Aromen, zu beaufschlagen.

Wie voranstehend erläutert, erfolgt die Ausformung der Tiefziehfolien mittels hydrostatischem Druck unter Wärmeeinwirkung. Hierfür wird die zu behandelnde Folie über einen Behälter gespannt, in dem sich das temperierte Fluid befindet, und von einer formgebenden Vorrichtung mit guter Wärmeleitfähigkeit unterstützt. Die formgebenden Vorrichtungen können Stege, perforierte Formen, Platten mit mindestens einer Aussparung oder ähnliche Konstruktionen sein. Bevorzugt befindet sich die Füllhöhe des Fluids und die Oberkante der jeweiligen Vorrichtung auf einem gleichen Höhenniveau. Die homogene Wärmezufuhr durch das Fluid bewirkt, daß sich die Tiefziehfolie durch den hydrostatischen Druck gleichmäßig ausdehnt, so daß auch Auswölbungen mit Hinterschnitt realisiert werden können.

In dem Fall, wo die Tiefziehfolie nicht unmittelbar mit dem Fluid in Verbindung oder in Kontakt kommen soll, ist eine Trennmembran zwischen Flüssigkeit und Folie einsetzbar.

Bei einer ersten Ausführungsform des Befüllverfahrens wird das Behandlungsgut, z.B. Wurstbrät, mit Hilfe eines Füllkopfes unter Druck auf die eingespannte Folie gefüllt. Die Füllöffnung des Füllkopfes hat unmittelbaren Kontakt zu der zu verformenden Folie, wobei die Flächen oder Ränder des Fluidbehälters gegen den Füllkopf abgedichtet sind. Bei diesem Füllvorgang preßt das Brät die plastische Folie während des Füllvorgangs in das temperierte Fluid hinein. Die Formen können hierbei außer zur Packungsgestaltung auch für eine Volumenportionierung genutzt werden.

Nach dem Füllvorgang wird der Behälter mit dem Fluid abgesenkt oder es werden die befüllten Folien samt Füllkopf angehoben und aus dem Behälter entfernt. Beim Weitertransport erfolgt das Abdecken der tiefgezogenen Folien mit einer Oberfolie. Da das Füllgut unmittelbar mit der Oberkante des Tiefzugs abschließt, kann bei exakter Einstellung auf eine ansonstigen notwendige Evakuierung vor dem Versiegeln der Folie verzichtet werden. Die erhaltenen Packungen werden vereinzelt und zur Haltbarmachung in üblicher Weise weiter verarbeitet. Das Ausformen der Tiefziehfolie kann dadurch unterstützt werden, daß im Fluidbehälter ein Unterdruck durch Absaugen erzeugt wird.

Das vorstehend beschriebene Verfahren ist auch zur Ausformung einer Tiefziehfolie und Bewegung eines Stempels geeignet. Hierbei kann entsprechend dem Prinzip der kommunizierenden Röhren die Druckbewegung des Stempels zur Erzeugung eines auf das Fluid wirkenden Unterdrucks genutzt werden. Zum Erzeugen des Drucks, der zum Absenken des Stempels erforderlich ist, wird Fluid aus dem geschlossenen Behälter zum Vortrieb des Stempels abgefördert. Zum Anheben des Stempels, z.B. hinein in einen Dom, erfolgt eine umgekehrte Bewegung.

Bei einem weiteren Füllverfahren zur Fertigung von Produkten, deren Oberflächen behandelt werden sollen, ist der Einsatz eines Füllkopfes mit einem eingearbeiteten Küken besonders vorteilhaft. Ein Küken ist eine walzenartige Vorrichtung, die in einem Zylinder gelagert ist, wobei die Walze eine Längsaussparung aufweist. Der Zylinder verfügt hierbei über mindestens eine Zufluß- und eine Austrittsöffnung. Durch die Stellung bzw. die Position der Walze wird zumindest eine Öffnung abgedeckt oder geöffnet. Üblicherweise werden die Eintritts- und die Austrittsöffnung gleichzeitig, ähnlich einem Kugelhahn, geöffnet oder geschlossen, damit ein breiter, exakter Volumenstrom passieren kann oder der geförderte Volumenstrom unterbrechbar ist.

Das vorstehend beschriebene Küken wird seitlich direkt an eine Füllöffnung angeschlossen. Über eine z.B. Ringdüse erfolgt während des Füllvorgangs ein gleichmäßiges Beaufschlagen des Füllguts mit pastösen oder flüssigen Materialien. Um während des Brättransports Verwirbelungen in das Küken auszuschließen, ist vorgesehen, daß die Maße der Kükenaussparung und die der Füllöffnung übereinstimmen. Für eine einwandfreie Füllung wird lufteinschlußfrei gearbeitet.

Ein gleichmäßiger Vorschub des Bräts kann verfahrensgemäß dadurch unterstützt werden, daß zu Beginn des Füllvorgangs ein Kolben, der die Füllöffnung abdichtet, in seine Ausgangsstellung gegenüber der Füllöffnung zurückgedrängt wird.

Sobald hier der Hohlraum des Kükens vollständig mit Brät gefüllt ist, wird das Küken gedreht. Der Hohlraum im Küken kann damit auch der Volumenportionierung dienen. Ein Stempel oberhalb der Kükenöffnung drückt dann paßgenau das Brät auf die unter dem Küken befindliche, gespannte Folie, und zwar in der bereits geschilderten Weise.

Eine dritte Füllvariante besteht erfindungsgemäß darin, die Tiefziehfolie in mindestens einen oberhalb des Fluidbehälters angebrachten Dom auszuformen. Durch eine verschließbare Öffnung wird die in dem Dom vorhandene Luft abgeführt. Sobald die Folie lufteinschlußfrei an den Wandungen anliegt, wird die vorgesehene Auslaßöffnung verschlossen.
Die Befüllung der Tiefziehfolie kann dann, wie nachstehend erläutert, in unterschiedlicher Weise erfolgen.
Zum einen wird durch eine Füllöffnung im oberen Bereich des Doms Brät gegen die Folie gespritzt. Sobald die gewünschte Menge eingefüllt wurde, drückt ein im Kopfbereich des Doms angebrachter Stempel das Brät in die vorgeformte und noch umzustülpende Tiefziehfolie. Die Weiterverarbeitung erfolgt wie erläutert.
Andererseits kann eine seitliche Füllöffnung im oberen Bereich des Doms zu Beginn des Füllvorgangs durch einen Kolben verschlossen werden, der im Laufe des Füllvorgangs in seine Ausgangsstellung zurückgezogen oder geschoben wird. Auch bei dieser Füllvariante ist eine Oberflächenbehandlung mittels einer Ringdüse während des Füllvorgangs möglich.

Letztendlich kann im Kopfbereich des Doms ein Küken eingearbeitet sein. Die Weiterverarbeitung des Füllguts erfolgt dann unter Rückgriff auf das eingesetzte Küken wie bereits erläutert.

Eine weiterhin realisierbare Ausführungsform geht davon aus, daß in einem Dom ein Stempel oder ein Küken, eventuell durch eine Membran und die tiefziehfähige Folie getrennt, durch das Fluid so weit nach oben gedrückt, d.h. bewegt wird, bis in der Endstellung eine Füllöffnung freigegeben ist. Danach kann dann das Brät freigegeben und auf die Folie, z.B. durch das Küken portioniert, gespritzt bzw. aufgebracht werden.

Nachfolgend wird die Erfindung anhand von Ausführungsbeispielen und Figuren näher beschrieben.

Hierbei zeigen:
- Fig. 1: eine schematische Darstellung der ersten Ausführungsform der Erfindung;
- Fig. 2: eine zweite Ausführungsform der Erfindung, bei der schematisch der Einsatz einer Membran dargestellt ist;
- Fig. 3: eine weitere Ausführungsform der Erfindung, die den Einsatz einer Temperflüssigkeit darstellt;
- Fig. 4: eine Ausführungsform der Erfindung, welche die Verwendung einer hinterschnittenen Matrizenform darstellt und
- Fig. 5: eine Ausführungsform der Erfindung, in welcher eine Befüllung eines ausgeformten Körpers dargestellt ist.

In der nachfolgenden Beschreibung werden für gleiche und gleichwirkende Teile dieselben Bezugsziffern verwendet.

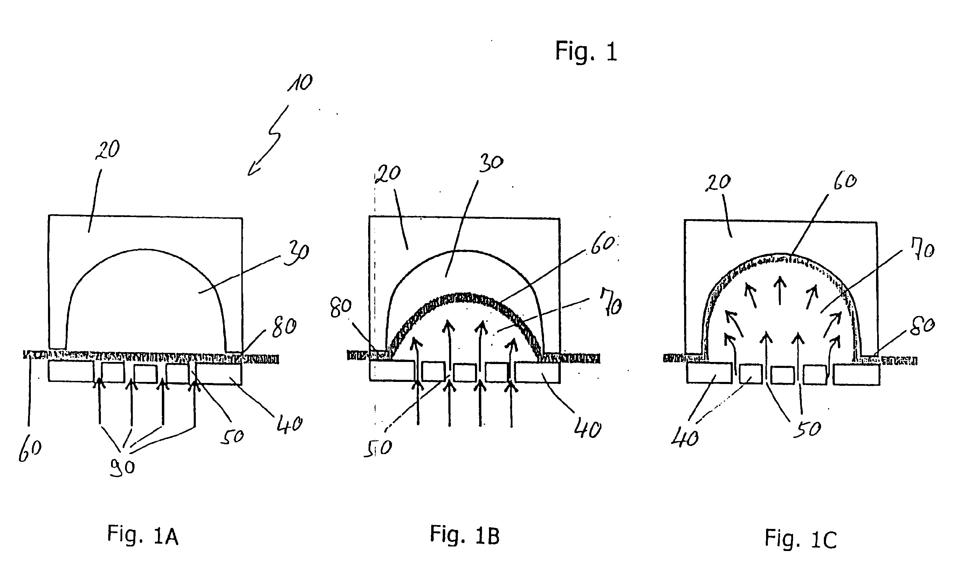

Fig. 1 ist in drei Teilfiguren mit den Bezeichnungen 1A, 1B und 1C unterteilt, die die Ausformung eines Hohlkörper durch Tiefziehen mittels des erfindungsgemäßen Verfahrens schematisch zeigen.

Fig. 1 zeigt demnach einen Spannrahmen 10, der aus einer Matrize 20 und einem Deckelelement 40 mit Öffnungen für eine Patrizenflüssigkeit 50 besteht. Über dem Deckelelement 40 ist eine Folie 60 angeordnet, die in einem randseitigen Haltebereich 80 zwischen dem Deckelelement 40 und der Matrize 20 gehalten ist. Die Pfeile 90, die im weiteren nicht näher bezeichnet werden, symbolisieren den Zutritt einer Patrizenflüssigkeit in einen Patrizenbereich 70, so daß sich die Folie 60 in den Matrizenbereich 30 hinein wölbt. Während des Aufwölbens tritt in dem Matrizenbereich 30 befindliches Gas durch Öffnungen (nicht gezeigt) in der Matrize 20 aus, so daß eine Anlagerung der Folie 60 an die innere Matrizenwandung homogen und gleichmäßig stattfinden kann.

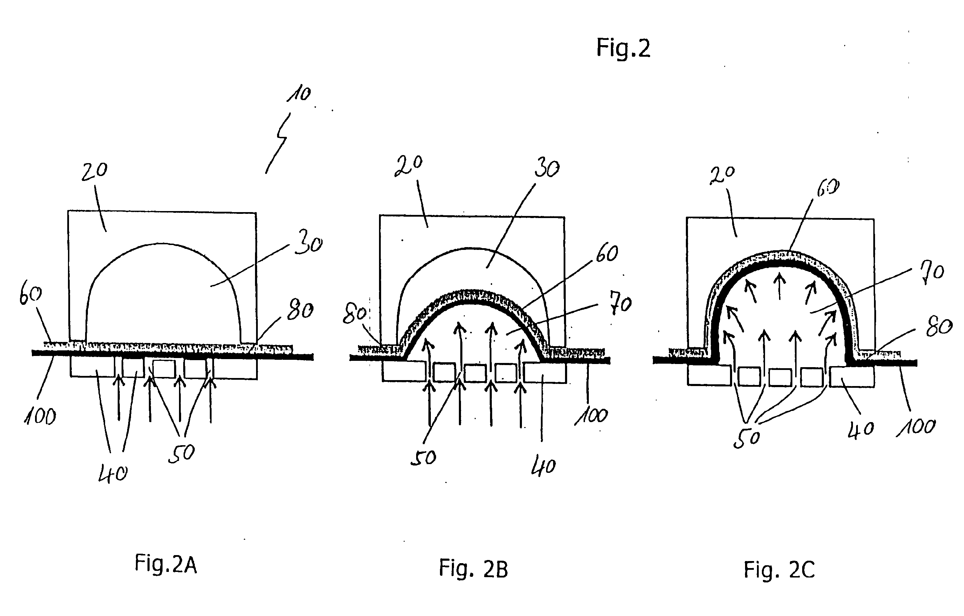

Fig. 2 ist analog zu Fig. 1 ebenfalls in drei Teilfiguren 2A, 2B und 2C unterteilt. Im wesentlichen zeigt Fig. 2 denselben Tiefziehvorgang wie Fig. 1. Es ist jedoch zwischen der durch die Öffnungen 50 einströmenden Patrizenflüssigkeit eine Membran 100 zwischen der Folie 60 und der Patrizenflüssigkeit, respektive dem Patrizenbereich 70 angeordnet. Die Membran 100 ist gemeinsam mit der Folie 60 in einem randseitigen Haltebereich 80 zwischen der Matrize 20 und dem Deckelelement 40 gehalten und wird während des Tiefziehvorgangs mit der Folie 60 ausgeformt.

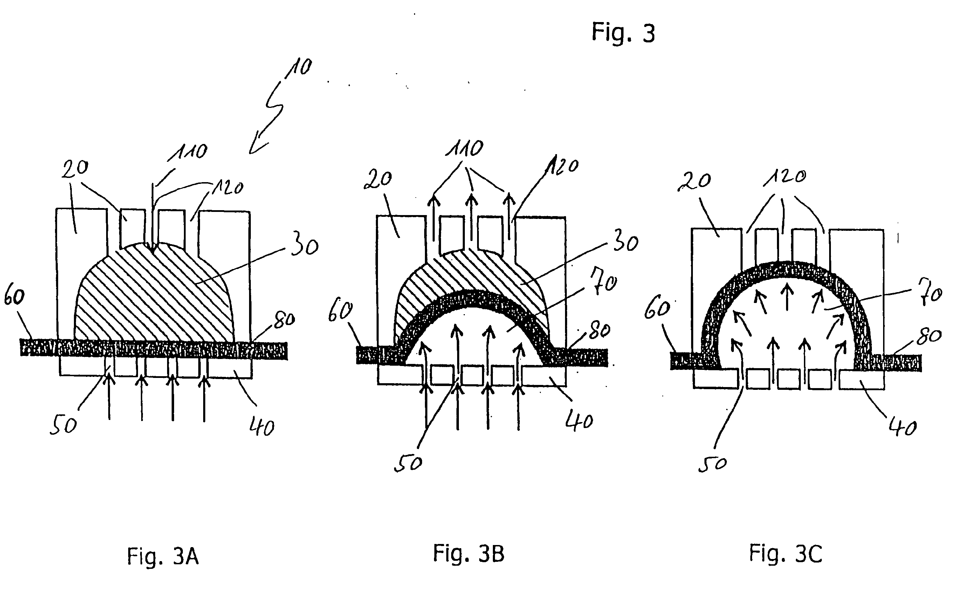

Fig. 3 umfaßt ebenfalls drei Unterfiguren 3A, 3B und 3C, die in dieser Reihenfolge den Ablauf eines erfindungsgemäßen Tiefziehverfahrens unter Einsatz einer getemperten Patrizenflüssigkeit und eines Temperfluids, das durch Öffnungen 120 an der Oberseite der Matrize 20 in einen Matrizenbereich 30 geleitet wird, darstellen.

Die Fließrichtung des Temperfluids ist durch den Pfeil 110 in Fig. 3A symbolisiert. Auf diese Weise ist es möglich, eine dicke Folie 60, die in einem randseitigen Haltebereich 80 des Rahmens 10 zwischen einem Deckelelement 40 und einer Matrize 20 gehalten ist, tiefzuformen. Fig. 3B stellt dar, wie in dem Ausmaß, in dem Patrizenflüssigkeit durch Öffnungen 50 in den Patrizenbereich 70 gelangt, aus den Öffnungen 120 gemäß den Pfeilen 110 Temperfluid aus dem Matrizenbereich 30 strömt, bis die Folie 60, wie in Fig. 3C dargestellt, vollständig an der inneren Wandung der Matrize 20 anliegt. Die Öffnungen 120, durch die das Temperfluid ausgeströmt ist, sind nunmehr im Bereich der inneren Wandung der Matrize 20 mit Klappen verschlossen (nicht gezeigt), so daß die Folie 60 homogen und gleichmäßig an der inneren Wandung der Matrize 20 anliegt.

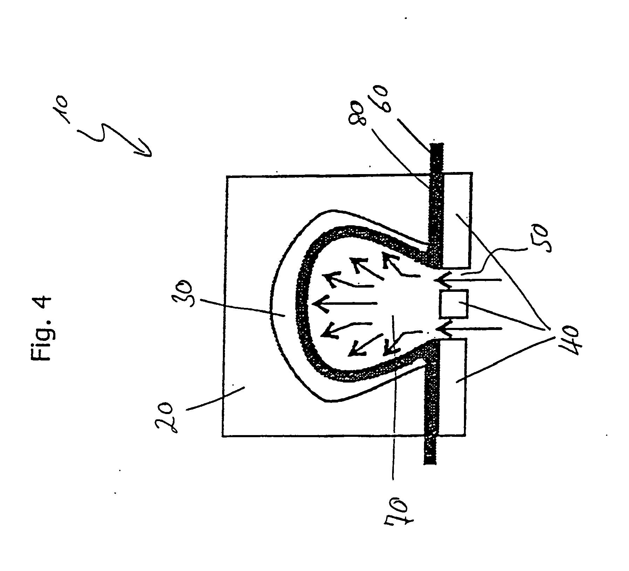

Fig. 4 zeigt eine schematische erfindungsgemäße Vorrichtung mit einer hinterschnittenen Materialform. Das erfindungsgemäß zur Herstellung eines Formkörpers vorgestellte Verfahren eignet sich auch zur Fertigung einer Tiefziehform mit Hinterschnitt. Da sich die eingesetzte Flüssigkeit nach allen Seiten hin gleichmäßig ausdehnt, herrscht an jeder Stelle der Patrizenflüssigkeit und somit auch der Folie der gleiche Druck. Beim Einsatz eines geeigneten Behandlungsguts ist es so möglich, jede nur erdenkliche Formgebung für eine Hohlform zu realisieren. Matrizen, bei denen konstruktiv eine Teilung zur Entnahme des Behandlungsguts vorgesehen ist, erlauben es, auch komplizierte starre Formen zu fertigen, die keiner Belastung durch Deformation standhalten würden. Dies ist erfindungsgemäß vorgesehen. Die bereits vorgestellten Verfahrensvarianten sind auch für diese Formen einsetzbar.

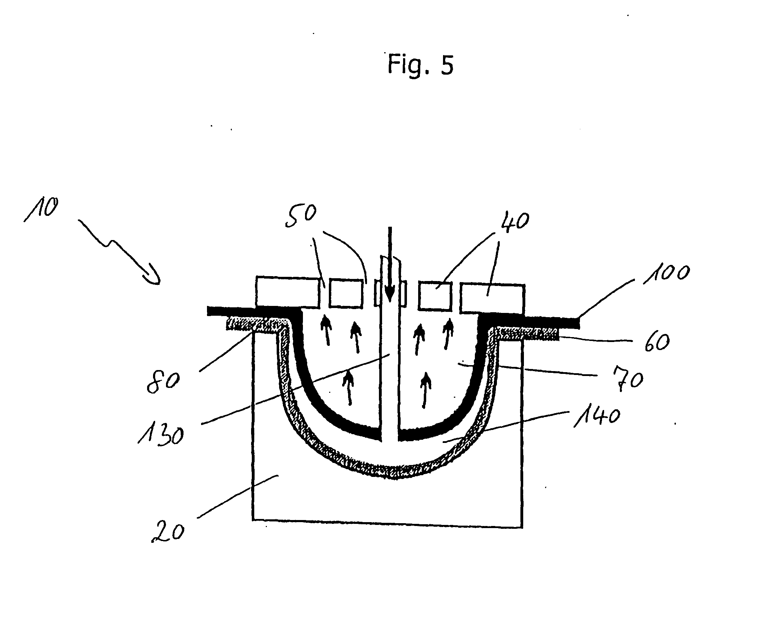

Fig. 5 zeigt eine Variante des erfindungsgemäßen Verfahrens, bei dem eine Befüllvorrichtung 130 durch eine Membran 100 hindurch die Möglichkeit schafft, eine Nutzflüssigkeit in einen Aufnahmebereich 140 für die Nutzflüssigkeit zu transportieren. Durch das Einbringen der Nutzfüssigkeit wird in gegenläufiger Weise die Patrizenflüssigkeit aus dem Patrizenbereich 70 verdrängt. Die Befüllung des Aufnahmebereichs 140 ist unmittelbar nach dem Ausformen der Folie 60 möglich. Die Membran 100 ist plastisch gummiartig flexibel ausgebildet, so daß sie sich bei einem Füllen des Aufnahmebereichs 140 allmählich in ihre Ausgangslage unterhalb des Deckelelements 40 zurückbildet. Die Ausformung der Folie 60 erfolgt analog zu bereits vorstehend genannten Verfahren.

### Bezugszeichenliste

- 10: Rahmen
- 20: Matrize
- 30: Matrizenbereich
- 40: Deckelelement
- 50: Öffnungen für Patrizenflüssigkeit
- 60: Folie, verformbares Material
- 70: Patrizenbereich
- 80: randseitiger Haltebereich
- 90: Pfeile für Bewegungsrichtung der Patrizenflüssigkeit
- 100: Membran
- 110: Pfeile für Bewegungsrichtung des Temperfluids
- 120: Öffnung für Temperfluid
- 130: Befüllvorrichtung
- 140: Aufnahmebereich für Nutzflüssigkeit

## Patentansprüche

1. Verfahren zum Herstellen von geformten Körpern, beispielsweise von Hohlkörpern oder Verpackungen für den Lebensmittel - und Nahrungsgüterbereich, mittels Tiefziehen,
wobei
ein den Körper bildendes verformbares Material (60) mittels einer Patrizenflüssigkeit an eine Matrizenform (20) angepaßt, der Tiefziehvorgang durch ein Erwärmen der Patrizenflüssigkeit unterstützt, wird, **dadurch gekennzeichnet, dass** der Matrizenraum (30) vor einem Beginn des Tiefziehvorgangs mit einem erwärmten Temperfluid in Form eines temperierten Gases oder einer temperierten Flüssigkeit zumindest teilweise gefüllt wird, welches während des Tiefziehvorgangs aus dem Matrizenraum (30) entfernt wird, und
als Patrizenflüssigkeit Nutzflüssigkeiten wie Fertigsuppen, Säfte oder dergleichen flüssige Substanzen verwendet werden.

2. Verfahren nach Anspruch 1,
**dadurch gekennzeichnet, dass**
während des Tiefziehvorgangs ein Matrizenraum (30) durch Anlegen eines Unterdrucks entlüftet wird.

## Claims

1. Method for producing moulded bodies, e.g. hollow bodies or packagings for the foodstuff and food product sector, by means of deep drawing,
wherein
a deformable material (60) forming the body is adapted by means of a male mould type liquid to a female mould (20), the deep drawing process being supported by heating the male mould type liquid,
**characterized in that**
the female mould space (30) is filled at least partially with a heated tempering fluid in the form of a tempered gas or a tempered liquid prior to starting the deep drawing process, the tempering fluid being removed from the female mould space (30) during the deep drawing process, and
utility liquids such as instant soups, juices or the like liquid substances are used as male mould type liquid.

2. Method according to claim 1,
**characterized in that**
during the deep drawing process a female mould space (30) is deaerated by applying a vacuum.

## Revendications

1. Procédé pour fabriquer des corps mis en forme, par exemple des corps creux ou des emballages pour le secteur des produits alimentaires et des produits nutritifs, par emboutissage,
dans lequel
un matériau déformable (60) formant le corps est adapté à la forme d'une matrice (20) au moyen d'un liquide servant de patrice, l'opération d'emboutissage est assistée par un échauffement du liquide servant de patrice, **caractérisé en ce que** la cavité de matrice (30) est au moins partiellement remplie avant le commencement de l'opération d'emboutissage, avec un fluide de températion réchauffé sous la forme d'un gaz tempéré ou d'un liquide tempéré, que l'on l'enlève hors de la cavité de matrice (30) pendant l'opération d'emboutissage, et
**en ce que** l'on utilise à titre de liquide servant de patrice des liquides utiles, comme des soupes prêtes à l'emploi, des jus ou des substances liquides analogues.

2. Procédé selon la revendication 1,
**caractérisé en ce que** la cavité de matrice (30) est désaérée pendant l'opération d'emboutissage par application d'une dépression.
